# EUROPEAN PATENT SPECIFICATION

(11) **EP 2 861 316 B1**
(45) Date of publication and mention of the grant of the patent: **03.06.2020**
(21) Application number: 13728775.1
(22) Date of filing: 14.06.2013
(51) Int. Cl.: B01D 9/00, A61K 9/16

(54) **SELECTIVE CRYSTALLIZATION PROCESSES USING REVERSE MICELLE AND W/O MICROEMULSION SYSTEMS - MULTITASK EMULSION CRYSTALLIZATION (MEC)**
SELEKTIVE KRISTALLISATIONSVERFAHREN MITTELS REVERSER MIZELLEN UND OHNE MIKROEMULSIONSSYSTEME - MULTITASK-EMULSIONSKRISTALLISIERUNG (MEC)
PROCÉDÉS DE CRISTALLISATION SÉLECTIFS UTILISANT DES SYSTÈMES DE MICROÉMULSIONS E/H ET À MICELLES INVERSÉES, CRISTALLISATION EN ÉMULSION MULTITÂCHE (MEC)

(30) Priority: 15.06.2012 SI 201200205; 02.08.2012 SI 201200248
(43) Date of publication of application: 22.04.2015
(73) Proprietor: Farma GRS, d.o.o., 8000 Novo mesto (SI)
(72) Inventor: KLJAJIC, Alen, 3000 Celje (SI); PECAVAR, Anica, 8000 Novo mesto (SI); ZUPET, Rok, 1000 Ljubljana (SI)
(74) Representative: Hoefer & Partner Patentanwälte mbB
(86) International application number: PCT/EP2013/062449
(87) International publication number: WO 2013/186390

(56) References cited:
- WO-A2-2011/027097
- JUNKO YANO ET AL: "Crystallization of Organic Compounds in Reversed Micelles. I. Solubilization of Amino Acids in Water-Isooctane-AOT Microemulsions", LANGMUIR, vol. 16, no. 26, 1 December 2000 (2000-12-01), pages 9996-10004, XP055594007, US ISSN: 0743-7463, DOI: 10.1021/la0004101

## Description

### FIELD OF THE INVENTION

The invention described herein is in the field of separation processes, more particularly, in the field of selective crystallization methods for purification of organic compounds.

### BACKGROUND OF THE INVENTION

Formation of emulsions is well-known in the art and is by definition "droplets" dispersed in a "continuous phase". Optionally, the emulsions contain additives such as surface active agents lowering the interfacial tension by adsorption of surfactants and stabilizing the emulsion droplets to a certain degree (E. Ruckenstein, J. C. Chu; Stability of Microemulsions, J. Chem. Soc Faraday Trans II 1975; 71: 1690-1707). The droplet size is not limited and usually in range between 0.2-100 µm.

The mobility properties, ionic and molecular transport properties, of the w/o reversed micelles or w/o microemulsions are commonly investigated using electrical conductivity, since this method is very sensitive to microstructure of crystallization media (A. Kljajic et al.; Characterization of water/sodium bis(2-ethylhexyl) sulfosuccinate/sodium bis(amyl) sulfosuccinate/n-heptane mixed reverse micelles and w/o microemulsion systems: The influence of water and sodium bis(amyl) sulfosuccinate content, Colloid Surf. A: Physicochem. Eng. Asp. 2011; 385: 249-255): In the logarithm of conductivity *κ* vs. water content W diagram a characteristic maximum is observed at lower water content (denoted as *Wₘₐₓ*) and is followed by a reduction of log *κ* and further by a sharp increase of log *κ* after further addition of water. In the first part of the log*κ*-*W* curve the mechanism of conductance is attributed to charge fluctuations. With the addition of water, the diameter of dispersed water droplets increases and they more easily redistribute the charge carriers. However, the increase of the droplet size results in a decrease of the mobility of charged droplets. These effects promote the formation of an electrical double layer and, consequently, cause a rise in the repulsion effect between the droplets, which lowers the conductivity.

At a higher concentration of water, the volume fraction of the dispersed phase reaches a certain value (percolation threshold), which indicates the formation of the first infinite cluster of droplets presented in a second part of the log*κ*-*W* curve. The attractive forces between aggregates increase, promoting the formation of clusters with water paths, through which the charge carriers can move efficiently, resulting in a high peak of conductivity. This mechanism of conductance is called percolation conductivity and is induced by a specific amount of water (or temperature), as presented in the second part of the log*κ*-*W* curve (M. Borkovec, H.F. Eicke, H. Hammerich, B.D. Gupta; Two percolation processes in microemulsion, J. Phys. Chem. 1988; 92: 206-211). The clustering of the droplets at the percolation threshold typically leads to an increase in viscosity.

Solvent emulsion crystallization using two immiscible liquids and optionally surface active agents (surfactant)/co-surfactants forming an emulsion is known in the art. In this type of crystallization systems the impure chemical compound is dissolved mainly in one phase (dispersed phase), acting as a solvent phase and forming an emulsion with another immiscible liquid phase, anti-solvent phase. At higher temperatures, after the impure compound has been dissolved, the emulsion is cooled to a targeted temperature where crystallization process takes place. After the crystallization is completed formed crystals are isolated from the emulsion (I. Holeci, Chem.Prumysl, 14, 145, 1964).

Instead of the solvent phase, the solute alone can present the immiscible phase in emulsion system (R. J. Davey, J. Garside, A. M. Hilton, D. McEwan, J. W. Morrison, Letters to Nature, 357, 1995).

Using emulsion media for crystallization (melt emulsions, solvent emulsions) as a separation process is known in the art. The same emulsion can be used several times as recycled solvent/anti-solvent media. It means that after the crystallization from emulsion is completed, the emulsion can be heated again to dissolve the mixture of chemical material (containing the desired compound) additionally and to perform the emulsion crystallization cycle for the second time, (US 6,855,176). This is commonly used in the field of crystallization science and technology. Although, the impurities concentrate in the emulsion, the separation potential becomes lower for each additional use of the crystallization media (each cycle). Several crystallization solvents (mixtures) are used for different crude products.

Furthermore, microemulsions have been used for isolating one or more enantiomer components from enantiomeric mixtures through co-crystallization (US 6,570,036; WO 97/32644).

Crystallization of substances using thermodynamically unstable emulsions as crystallization media (Gibbs free enthalpy of formation ΔG > 0) is known from WO2010/112222. The presented methods are suitable for industrial use due to high capacity (low mass/volume ratio), good separation potential, high yields and acceptable crystallization times. However, the size of dispersed droplets is in great dependence of the speed, size, and type of the stirrer used. This means highly-skilled operators are needed during scale-up processes, and also during the regular use of the process on industrial scale. Also, different crystallization solvents (mixtures) are used for different crude products.

Crystallization of substances using thermodynamically stable (micro)emulsions as crystallization media (Gibbs free enthalpy of formation ΔG < 0) is known from WO 97/32644. Presented method is not suitable for industrial use due to low capacity (low mass/volume ratio), low yields and long crystallization times (US 6,855,176; WO 97/32644). Also, different crystallization solvents (mixtures) are used for different crude products.

As known in the art it is possible to operate with thermodynamically stable (micro) emulsions, dissolving the aggregate mixture at higher temperatures, cooling the emulsion to lower temperature and gaining a high level of super saturation. At this lower temperature, seeding is used to promote crystallization (WO 99/12623). This type of crystallization is characterized in seeding the desired component and seed crystals of at least one other substance. As disclosed in WO 99/12623, the crystallization needs to be carried out in absence of other solid particles in the crystallization container because they might promote crystallization of impure substance in combination with consecutive or simultaneous seeding. Also, you need to have isolated/purified impurities to be able to do the necessary steps. Furthermore, different crystallization solvents (mixtures) are used for different crude products. These are the critical points of the process and can have serious drawbacks for the large-scale industrial crystallization process.

Junko Yano et al. "Crystallization of Organic Compounds in Reversed Micelles. I. Solubilization of Amino Acids in Water-Isooctane-AOT Microemulsions", Langmuir, 2000; vol. 16, no. 26, pages 9996-10004 discloses the crystallisation of amino acids from water-in-isooctane microemulsions stabilized by sodium (di-2-ethylhexyl)sulfosuccinate.

Above presented examples of known cases of crystallization of substances using thermodynamically stable (micro)emulsions as crystallization media (Gibbs free enthalpy of formation ΔG < 0) always consist of using organic liquid droplets in a continuous water phase as presented in examples. This characteristic is found to be important for emulsion crystallization according to the examples presented in prior art.

WO 2011/027097 (A2) pertains to a method of crystallising a compound comprising either: (i) providing a first confined solution comprising the compound; and adding more of the compound to and/or increasing the degree of saturation of the first confined solution, whereby to provide a resultant second confined solution that comprises more compound and/or that has a greater degree of supersaturation relative to a confined supersaturated solution of the same compound stabilised solely by being confined; or (ii) providing a first confined melt comprising the compound; and cooling and/or increasing the pressure of the first confined melt, whereby to provide a resultant second confined melt that is cooler and/or is more pressurised relative to a confined supercooled melt of the same compound stabilised solely by being confined, whereby to effect the crystallising under confinement and under thermodynamic control.

There is a need to have a simple, selective and productive purification process, including preparation, separation and isolation of pure materials, appropriate for large-scale production of pure organic compounds, starting from crude materials. Especially, whenever the crude materials include related impurities which have similar structure and properties as the desired compound and are hard to purify using classical purification techniques. The need is most important in the field of synthesis of fine chemicals, more precisely chemicals, which are intermediates in the production of active pharmaceutical ingredients and also final APIs (active pharmaceutical ingredients).

The present invention overcomes the disadvantages of the prior art.

We have developed *multitask emulsion crystallization* (MEC) as separation process to overcome these difficulties. Its characteristics are high yields and effective separation of related impurities which results in obtaining a highly pure product. These features were developed based on usage of specific ionic and molecular transport properties of reverse micelle and water in oil (w/o) microemulsion system, which can be controlled through crystallization media composition. Also, it enables the use of crystallization media composed from the same organic phase (ICH3 class of solvents) and non-toxic surfactant for a wide range of crude materials with different physicochemical properties. Crystallization method according to present invention is described and further characterized in detail herein.

Using MEC results in high capacity of crystallization process, high separation potential for related impurities, high yields of crystallization cycle, low amounts of surfactant needed and also usage of non-toxic components relating to solvents and surface active agent used. There is a need in art for crystallization process characterized in effective and low-cost separation appropriate for large-scale purification of different pure organic compounds, since same system can be used for purification of different crude materials (different molecules).

### DESCRIPTION OF THE INVENTION

We have found out that using specific w/o reverse micelle and/or w/o microemulsion system as a crystallization media, with tunable ionic and molecular mobility properties, which enable use of water liquid droplets in a continuous organic phase (*n*-heptane) and can provide high efficiency for impurity removal, high yield of the process, high capacity (low mass/volume ratio), multi-usage of the same crystallization media (same components) is suitable for purification of different crude materials and consequently producing materials which contain traces of non-toxic surfactants. This is especially important in the field of pharmaceuticals.

The present invention relates to a process for increasing the purity of organic compounds, wherein the organic compound is crystallized from a stable emulsion comprising water, hydrocarbon and a surfactant, wherein water is dispersed phase and hydrocarbon is continuous phase, and wherein the emulsion comprising water, hydrocarbon and a surfactant is an emulsion comprising water, n-heptane and sodium bis(2-ethylhexyl)sulfosuccinate.

The term "organic compound" according to present invention means any compound containing carbon and hydrogen. Organic compound used in the process according to present invention can be of any purity, preferably the organic compound has purity of at least 30% (w/w), more preferably at least 50% (w/w) and most preferably at least 70% (w/w). Weight/weight (w/w) purity of the organic compound is defined as the weight of the compound of interest in a sample of given weight, expressed in percent.

The process according to present invention may be used for increasing the purity (purification) of any organic compound, preferably the organic compound is selected from the group consisting of prazoles such as lansoprazole, pantaprazole, rabeprazole, omeprazole, esomeprazole, dexlansoprazole; statins such as rosuvastatin, fluvastatin, simvastatin, lovastatin, atorvastatin, pitavastatin; ezetimibe, solifenacin, orlistat (formula III), lipstatin, fipronil, dabigatran, montelukast, sartans such as valsartan, candesartan, olmesartan, telmisartan, irbesartan, eprosartan; quetiapine, ropinirole, aliskiren and/or pharmaceutically acceptable salts or derivatives thereof. More preferably, the process according to present invention is used for the purification of aliskiren, orlistat, ropinirole, pitavastatin, pantoprazole and/or pharmaceutically acceptable salts or derivatives thereof. Most preferably, the process according to present invention is used for the purification of aliskiren bromolactone intermediate (formula I), aliskiren azide intermediate (formula II), orlistat, and/or pantoprazole sodium (formula IV).

The term "emulsion" according to present invention means any mixture of at least two immiscible liquids and optional further components, wherein the mixture comprising dispersed and continuous phase. Water is dispersed phase. Hydrocarbon is continuous phase.

The term "hydrocarbon" according to present invention means any compound or a mixture of compounds consisting only of carbon and hydrogen. Hydrocarbon can be selected from the group consisting of C5-C10 alkanes or C5-C10 cycloalkanes, and/or arenes. Preferably, the hydrocarbon is saturated hydrocarbon, such as hexane, heptane, isooctane, cyclohexane and/or cycloheptane, most preferably the hydrocarbon is n-heptane. Arene may be selected from benzene, toluene and/or xylene.

The term "surfactant" according to present invention means any surface active agent or a mixture of surface active agents capable of lowering the interfacial tension between dispersed phase and continuous phase. Preferably, the surfactant is selected from the group consisting of sulfosuccinate based surfacte-active agents. Most preferably, the surfactant is sodium bis(2-ethyhexyl)sulfosuccinate (AOT).

The term "stable emulsion" according to present invention means any emulsion having negative Gibbs free enthalpy of formation (ΔG<0). Unstable emulsions have ΔG>0 and need constant homogenization while stable emulsions remain unchanged even if not constantly homogenized once they are formed. To the naked eye a stable emulsion is a one phase system. One of the phases thus comprises water, to which other, water soluble polar solvents may be admixed, and the second phase comprises hydrocarbon to which other one or more non polar solvents can also be admixed.

Water soluble polar solvents and non-polar solvents , which may be used in the droplet or continuous phase, can be selected from the group consisting of alkanes, alkenes, alkins, aromatics, halogenated hydrocarbons, alcohols, ethers, ketones, amino acids, sugars, aldehydes, chiral solvents, esters, lactones, amides, lactames, mineral and synthetic oils, dimethylsulfoxide, dimethylformamide and acetonitrile.

These specific properties of the crystallization media can be produced preferably by using sodium bis(2-ethylhexyl)sulfosuccinate as a surfactant, *n*-heptane as an organic (continuous) phase and water (dispersed) phase. Different co-solvents and co-surfactants can also be used/added.

The present invention (MEC) provides a benefit of crystallization from reverse micelle media or w/o microemulsion media, operating process in a batch, close to continuous or continuous operating way with the use of appropriate homogenization system to keep formed suspension dispersed. Using developed crystallization operating system enables the use of hydrocarbon/water/surfactant, which are *n*-heptane/water/sodium bis(2-ethylhexyl) sulfosuccinate systems with different ratios of components, which enables control of the solubility properties of crystallization media, according to the properties of the impure substances. This is needed if use of hydrocarbon/water/surfactant, which are *n-*heptane/water/sodium bis(2-ethylhexyl) sulfosuccinate systems are used for different types (polarity, chemical structure) of crude materials.

The authors have developed an operating system, which enables efficient purification for different organic compounds using specific reverse micelle media or w/o microemulsion.

The application of MEC is developed on the basis of three basic principles:
a.) The principle for purification of related impurities from crude materials of organic compounds: The process is characterized in that the organic compound is dissolved at high temperatures, the prepared emulsion is cooled to an optimized temperature between the temperature at which the organic compound is dissolved in the emulsion and the temperature at which the crystallization is completed - the product isolated, and the seeds of pure organic compound are added to seed the crystallization of the product. The temperature of crystallization media is gradually cooled to the target temperature with optimized cooling speed. After the targeted temperature is reached, the suspo-emulsion is homogenized for some period of time. Finally, the product formed is isolated. The properties of the crystallization media are produced using sodium bis(2-ethylhexyl)sulfosuccinate as a surfactant, n-heptane as an organic (continuous) phase and water (dispersed) phase. This emulsion purification processes have high overall yields and purification potentials and are especially appropriate for large-scale, industrial applications. High efficiency of presented method (MEC) towards related impurities, from the purification point of view, has been shown for the first time.
b.) The principle for efficient industrial use: The same components may be used for preparation of different crystallization media from solubilization point of view (different ratios of components), preparing crystallization media with different properties enabling efficient purification for different types of crude materials (multitasking). Preferred processes of the present invention are based on using crystallization media consisting of *n*-heptane, water and sodium bis(2-ethylhexyl) sulfosuccinate. This is mainly because these components in different ratios form different, specific reverse micelle structures with desired solute solubility and ionic and molecular transport properties, enabling MEC. High efficiency, high capacity and usage of MEC for different crude materials, has been shown for the first time.
c.) The principle for safe use of purified products: In all of the experiments *n*-heptane was used as organic phase and sodium bis(2-ethylhexyl)sulfosuccinate was used as surface active agent. The *n*-heptane solvent belongs to ICH3 class of solvents. On the other hand, the surface-active agent used is registered as pharmaceutical excipient because of its non-toxicity within human use. These makes developed crystallization method especially appropriate for purification of APIs and its intermediates/derivatives. This principle of safe purification of different crude products using MEC has been shown for the first time.

We have surprisingly found out that the use of w/o reversed micelles or w/o microemulsions, prepared from *n*-heptane (continuous phase), water (dispersed phase) and sodium bis(2-ethylhexyl) sulfosuccinate, having logarithmic electrical conductivity log (*κ* / µS cm⁻¹) below 1.0, preferably below 0.5 and most preferably below 0.1, possess physical properties which enable MEC. Electrical conductivity is measured only in crystallization media alone at 22 °C, before the organic compounds are dissolved. Electrical conductivity measurements were made on emulsions without organic compound present by the Mettler Toledo digital conductometer SevenMulti equipped with the InLab741 probe with a conductivity cell constant of 0.10451 cm⁻¹ (accuracy ± 2%). The sample was kept at the temperature 295±0.5 K in an oil bath, using a Huber thermostat CC410.

The emulsion for crystallization according to present invention comprises water, n-heptan and sodium bis(2-ethyhexyl)sulfosuccinate. Water is dispersed phase, n-heptan is continuous phase and sodium bis(2-ethyhexyl)sulfosuccinate is
surfactant. More preferably, the emulsion for crystallization according to present invention consists of only water, n-heptan and sodium bis(2-ethyhexyl)sulfosuccinate. Most preferably, the emulsion for crystallization consist of only water as dispersed phase, n-heptan as continuous phase and sodium bis(2-ethyhexyl)sulfosuccinate as surfactant.

According to an embodiment, a process for increasing the purity of organic compounds, wherein the organic compound can be crystallized from a stable emulsion comprising or consisting of water, hydrocarbon and a surfactant, the emulsion comprising or consisting of water, hydrocarbon and a surfactant being an emulsion comprising or consisting of water, n-heptane and sodium bis(2-ethylhexyl)sulfosuccinate, can comprise:
a) providing a stable emulsion comprising or consisting of water, hydrocarbon and a surfactant;
b) combining organic compound with the stable emulsion comprising or consisting of water, hydrocarbon and a surfactant, in particular adding organic compound to the stable emulsion comprising or consisting of water, hydrocarbon and a surfactant;
c) dissolving said organic compound, preferably dissolving all solid present in the mixture obtained by combining organic compound with the stable emulsion;
d) crystallizing said organic compound, said crystallizing optionally comprises carrying out a forced nucleation step, for example optionally comprises adding of seed crystals of said organic compound, preferably seed crystals of pure organic compound, to the stable emulsion resulting from dissolving said organic compound, preferably resulting from dissolving all solid;
e) optionally isolating said organic compound in crystalline form, for example isolating by filtration;
f) optionally washing said organic compound in crystalline form; and
g) optionally drying said organic compound in crystalline form.

In particular, the stable emulsion for crystallization (e.g. as provided in process step a) supra) comprising or consisting of water, hydrocarbon and a surfactant, which may be used for combining with organic compound, and/or the emulsion present before starting crystallizing said organic compound) can have a molar ratio of the molar amount of water present in the emulsion to the total molar amount of surfactants present in the emulsion of between 0.5 and 100, preferably between 1 and 90 and most preferably between 5 and 80.

Preferably, the logarithm of electrical conductivity of stable emulsion (e.g. as provided in process step a) supra) comprising or consisting of water, hydrocarbon and a surfactant, which may be used for combining with organic compound), log (*κ* / µS cm⁻¹), before combining with the organic compound, is below 1.0, more preferably below 0.5 and most preferably below 0.1.

Unless explicitly indicated otherwise, the term "logarithm of electrical conductivity" means the decadic logarithm of electrical conductivity; a decadic logarithm being, as known in the art, a logarithm with base 10.

The organic compound preferably crystallizes or precipitates from the continuous hydrocarbon phase and interface between continuous hydrocarbon phase and water droplets, where the organic compound has been additionally solubilized by a surfactant such as sodium bis(2-ethylhexyl)sulfosuccinate and optionally additional co-surfactans.

Furthermore, the emulsion can contain a buffering agent, such as any weak acid or weak base, and solubility adjusting agents, such as any organic solvents or any other organic compound that influences the solubility, as known in the art.

The emulsion according to the present invention can additionally contain one or more co-surfactants and/or dispersants which assist in forming a w/o reverse micelles or microemulsion with specific physical properties. The co-surfactants can be any non-ionic, cationic or anionic molecule, preferably the co-surfactant is sulfosuccinate based co-surfactant and most preferably the co-surfactant is sodium diamyl sulfosuccinate.

The terms "aggregate mixture", "crude material" and "crude organic compound" are used for the organic compound with low purity, which contains a high level of impurities either synthetic, biosynthetic or degradable by origin.

"Final crystallization temperature" is the lower end temperature during the crystallization process. This is usually the temperature of suspo-emulsion just before the isolation process of formed product is performed.

In the examples the (jacket) reactor temperature RT (JRT) versus time during the cooling process is presented as a linear function. It is used as an average cooling rate for describing the approximate time needed for cooling to the desired temperature. The real function of (jacket) reactor temperature versus time of crystallization process can be any other continuous function.

Preferably, the process according to present invention comprises seeding, wherein the emulsion is seeded with seed crystals of organic compound. Seed crystals of organic compound have higher purity than the organic compound used for purification and are always more pure then the targeted purity of purified organic compound.

The "temperature of seeding" is the temperature, at which the seeds of organic compound are added.

The purity of organic compound may be increased by the process of the present invention to a purity of more than 97.0% (w/w), preferably more than 98.0% (w/w) and most preferably more than 99.0% (w/w) in a single crystallization cycle.

The emulsion comprising two immiscible liquids, surfactants, and optionally additives is prepared. The emulsion is heated and the organic compound is dissolved, the emulsion is cooled to the desired temperature (higher than the final temperature) where the seeding is performed (seeding temperature), to induce the crystallization. The crystallization takes place at the seeding temperature and/or within the time period of further lowering the temperature to the targeted crystallization temperature. In the present invention best results have been observed when:
- the temperature of seeding was between 1 - 30 °C lower than the temperature at which organic compound is dissolved, and
- the final crystallization temperature at which the crystallization is completed, is 2 - 50°C below the seeding temperature.

The molar yield in single crystallization cycle is preferably more than 70%, more preferably more than 80% and most preferably more than 85% of the purified organic compound.

For efficient control of selectivity of emulsion crystallization processes, characterized in having Gibbs free enthalpy of formation ΔG<0, an optimized cooling ramp of crystallization media is used. The emulsion cooling speed is preferably less than 1 K/min, more preferably less than 0.5 K/min, most preferably less than 0.3 K/min. The obtained product is isolated and washed. If needed, the re-process is performed. Instead of seeding, any other method for forced nucleation can be used, as known in the art (ultrasound etc.).

In an preferred embodiment of the invention, an emulsion with Free Gibbs energy of droplet formation AG<0 is formed, the organic compound to be purified is dissolved at an elevated temperature, then the emulsion is cooled to the seeding temperature, after which the temperature is still lowered to the final crystallization temperature at which the crystallization is completed.

It was found out that reverse micelle system formed with n-heptane, water and sodium bis(2-ethylhexyl)sulfosuccinate is a perfect process toolbox which enables fine adjusting of the organic compound solubility (process capacity point of view) and to achieve the selectivity potential of the crystallization media.

Another aspect of the present invention is the process as defined hereinabove, wherein the logarithm of electrical conductivity of emulsion, log (*κ* / µS cm⁻¹), is below 1.0, preferably below 0.5 and most preferably below 0.1. Electrical conductivity is measured in crystallization media alone at 22 °C, before the organic compounds are dissolved.

Preferred aspect of the present invention is the process as defined hereinabove, wherein the water is dispersed phase, n-heptan is continuous phase and the logarithm of electrical conductivity of emulsion, log (*κ* / µS cm⁻¹), is below 0.5.

The ratio of mass of organic compound (kg) to volume of hydrocarbon (L) according to present invention can be between 1 and 1000 kg/L, preferably between 30 and 500 kg/L and most preferably between 50 and 300 kg/L.

The overall molar surfactant concentration (c = n(surfactants) / V_{hydrocarbon}) in hydrocarbon according to present invention can be between 0.01 and 5 mol/L, preferably between 0.1 and 2 mol/L and most preferably between 0.05 and 0.5 mol/L.

Water content according to present invention is expressed as the molar ratio of the added water to the total content of surfactants (*W* = n(H₂O) / n(surfactants)). Water content (*W*) can be between 0.5 and 100, preferably between 1 and 90 and most preferably between 5 and 80.

Furthermore, it was found out that reverse micelle system formed, characterized with intense temperature and water dependent electrical conductivity, indicates non-typical transport properties, also designated as percolation phenomena. Surprisingly, it was found out by the authors that usage of these reverse micelle systems as crystallization medias improves the selectivity of purification process towards analogue molecules/derivatives thereof.

Taking into account these observations, multitask emulsion crystallization (MEC) method was applied for different crude materials (aggregate mixtures) as presented in examples.

Furthermore, it was found out that the cooling ramp is crucial for effective lowering of the nucleation rate due to more intensive crystal growth as a result of optimized saturation level achieved with the use of reverse micelle system as crystallization media.

Lowering the super saturation effect with optimized cooling ramp, after the seeds of pure compounds are added, produces larger particles with greater purity of formed product. This is because of the selective crystallization growth process within the emulsion crystallization. The emulsion cooling ramp after the seeding is preferably less than 0.5 K/min, more preferably less than 0.3 K/min, most preferably less than 0.1 K/min.

Further aspect of present invention is the process as defined hereinabove, wherein after seeding the temperature of the suspension is maintained at the temperature of seeding for a period of time which may vary from 5 minutes to 1 hour. After that, the suspension is further cooled.

Isolation of crystals from the formed suspo-emulsion can be carried out by any conventional means, such as filtration or centrifugation.

The present invention is illustrated by the following Examples without being limited thereto. With the examples we demonstrate the advantage of MEC to the crystallizations known in the art. Nevertheless, the invention is not limited to the presented crude organic compounds and may be applicable for the purification of any organic compound.

In all examples stirring for appropriate homogenization of formed suspo-emulsion was used during the crystallization process in the reactor. Crystallization processes were performed in standard 250 mL glass reactors system FlexyLab, Systaq, equipped with standard propeller type stirrer and a condenser. During the crystallization processes described below constant stirring speed between 200 - 300 rpm was maintained.

In all examples the mass of starting material and obtained product refers to product, dried under vacuum and nitrogen flow and having loss on drying < 1 %.

Aerosol® OT 100% (Cytec) is used as surfactant with an assay 98 - 100 wt. % of sodium bis(2-ethylhexyl)sulfosuccinate (AOT).

Aerosol® AY 100% (Cytec) is used as co-surfactant with an assay 97 - 100 wt. % of sodium bis(amyl)sulfosuccinate (DAS).

Purity or impurity content % is expressed as chromatographic purity (area %). Weight/weight (w/w) purity is expressed as weight % and is determined by the use of the external standard method.

The analytical methods for the chromatographic purity of organic compounds were the following:

### a) ALISKIREN SYNTHETIC INTERMEDIATES BROMOLACTONE AND AZIDE, HPLC METHOD

The product purity is assessed by high pressure liquid chromatography (HPLC):
Column: X-Bridge Shield RP18 75 x 4.6mm, 2.5µm
Mobile Phase: Gradient elution (from 40%B to 100%B in 35 minutes)
Eluent A: 0.01M (NH4)H₂PO₄ pH=6.5
Eluent B: 95 % acetonitrile
Detection: UV 210 nm

### b) ORLISTAT, HPLC METHOD

The product purity is assessed by high pressure liquid chromatography (HPLC):

| | |
|---|---|
| Column: | Inertsil ODS3, 150 × 4.6 mm, 3 µm particles |
| Mobile Phase: | Gradient elution (from 25%B to 100%B in 75 min) |
| Eluent A: | 0,1% phosphoric acid |
| Eluent B: | acetonitrile |
| Detection: | UV 200 nm |

### c) ROPINIROL, HPLC METHOD

The product purity is assessed by high pressure liquid chromatography (HPLC):

| | |
|---|---|
| Column: | X Bridge C-18, 150 x 4.6mm, 3.5µm |
| Mobile Phase: | Gradient elution (from 10%B to 80%B in 30 minutes) |
| Eluent A: | 0.025M (NH4)₂HPO₄ pH=7.5 |
| Eluent B: | acetonitrile |
| Detection: | UV 250 nm |

### d) PANTOPRAZOLE, HPLC METHOD

The product purity is assessed by high pressure liquid chromatography (HPLC):

| | |
|---|---|
| Column: | Gemini C18, 150 x 4.6mm, 3µm |
| Mobile Phase: | Gradient elution (from 33%B to 90%B in 40 minutes) |
| Eluent A: | 0.01M Na₂HPO₄ pH=6.5 |
| Eluent B: | methanol and acetonitrile in the ratio 7:3 |
| Detection: | UV 280 nm |

### EXAMPLES

### Example 1: Purification of bromolactone intermediate of aliskiren

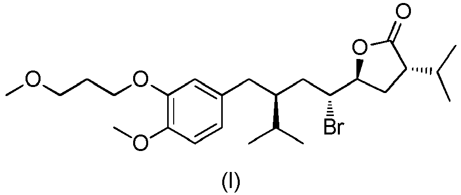

6.0 g of crude bromolactone intermediate of aliskiren, (3S,5S)-5-((1R,3S)-1-bromo-3-(4-methoxy-3-(3-methoxypropoxy)benzyl)-4-methylpentyl)-3-isopropyldihydrofuran-2(3*H*)-one (purity 41.8 %, 37.8 w/w %, aliskiren intermediate), was added to 53 mL of an emulsion. The emulsion was prepared by mixing the components at the room temperature in the following order and ratio; 1 mL of n-heptan, 0.23 g of Aerosol® OT 100% (98 w/w % sodium bis(2-ethylhexyl)sulfosuccinate) and 0.1 mL of water. The emulsion was pre-heated to 30 °C before adding the bromolactone intermediate. After the addition, the crystallization mixture was maintained at 30 °C for 15 minutes for all solid to dissolve. Then the emulsion was cooled to - 10°C with average cooling ramp approx. 0.07 °C/min. The seeds of pure bromolactone intermediate were added (30 mg) at 27 °C. The suspension was maintained at the final crystallization temperature (-10°C) for the next 8 hours to allow bromolactone intermediate to completely crystallize. The formed product was isolated by filtration and washed with 2 mL of water.

2.1 g of product with a purity of 95.57 area % and 91.3 w/w % was isolated.

### Example 2: Purification of bromolactone intermediate of aliskiren

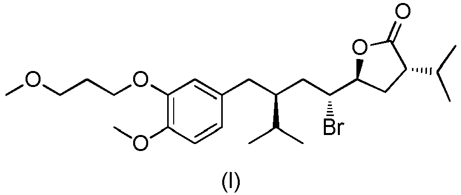

6.0 g of crude bromolactone intermediate (3S,5S)-5-((1R,3S)-1-bromo-3-(4-methoxy-3-(3-methoxypropoxy)benzyl)-4-methylpentyl)-3-isopropyldihydrofuran-2(3*H*)-one (purity 41.8 %, 37.8 w/w %, aliskiren intermediate) was added to 53 mL of an emulsion. The emulsion was prepared by mixing the components at the room temperature in the following order and ratio; 1 mL of n-heptan, 0.23 g of Aerosol® OT 100% (98 w/w % sodium bis(2-ethylhexyl)sulfosuccinate) and 0.1 mL of water. The emulsion was pre-heated to 30 °C before adding the bromolactone intermediate. The crystallization mixture was maintained at 30 °C for 15 minutes for all solid to dissolve. Then the emulsion was cooled to -10 °C with average cooling ramp approx. 0.07 °C/min. The seeds of pure bromolactone intermediate were added (30 mg) at 27 °C. The suspension was maintained at the final crystallization temperature (-10°C) for the next 8 hours to allow bromolactone intermediate to completely crystallize. The formed product was isolated by filtration and washed with 2 mL of water.

2.1 g of product with a purity of 95.40 area % and 90.8 w/w % was isolated.

### Example 3: Purification of bromolactone intermediate of aliskiren

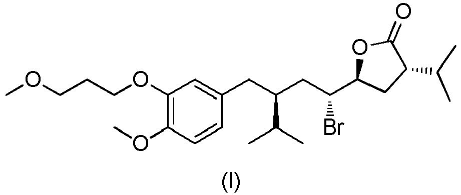

194.6 g of crude bromolactone intermediate (3S,5S)-5-((1R,3S)-1-bromo-3-(4-methoxy-3-(3-methoxypropoxy)benzyl)-4-methylpentyl)-3-isopropyldihydrofuran-2(3*H*)-one (purity 41.8 %, 37.8 w/w %, aliskiren intermediate) was added to an emulsion, which was prepared by mixing 1600 mL of n-heptan, 368 g of Aerosol® OT 100% (98 w/w % sodium bis(2-ethylhexyl)sulfosuccinate) and 160 mL of water. The emulsion was pre-heated to 30 °C before adding the bromolactone intermediate. The crystallization mixture was maintained at 30 °C for 15 minutes for all solid to dissolve. Then the emulsion was cooled to -10 °C with average cooling ramp approx. 0.07 °C/min. The seeds of pure bromolactone intermediate were added (30 mg) at 27 °C. The suspension was maintained at the final crystallization temperature (-10°C) for the next 22 hours to allow bromolactone intermediate to completely crystallize. The formed product was isolated by filtration and washed with 65 mL of water.

65.8 g of product with 95.73 % purity (area %) was isolated.

### Example 4: Purification of azide intermediate of aliskiren

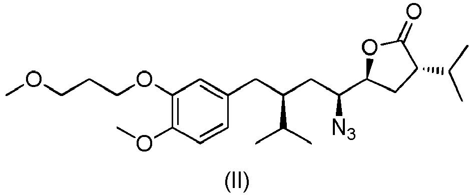

7.70 g of crude azide intermediate (3S,5S)-5-((1S,3S)-1-azido-3-(4-methoxy-3-(3-methoxypropoxy)benzyl)-4-methylpentyl)-3-isopropyldihydrofuran-2(3*H*)-one (purity 64.9 %) was added to 117 mL of an emulsion. The emulsion was prepared by mixing the components at the room temperature in the following order and ratio; 1 mL of n-heptan, 0.16 g of Aerosol® OT 100% (98 w/w % sodium bis(2-ethylhexyl)sulfosuccinate) and 0.1 mL of water. The emulsion was pre-heated to 55 °C before adding the azide intermediate. After the azide intermediate was added to an emulsion, crystallization mixture was maintained at 50 °C for 15 minutes for all solid to dissolve. Then the emulsion was cooled to 10 °C with average cooling ramp approx. 0.11 °C/min (approx. 6 h). The suspension was maintained at the final crystallization temperature (10 °C) for the next 12 hours to allow azide intermediate to completely crystallize. The formed product was isolated by filtration and washed with 10 mL of water.

4.40 g of product with 98.08 % purity (area %) was isolated.

### Example 5: Purification of azide intermediate of aliskiren

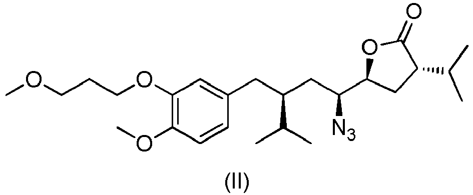

7.70 g of crude azide intermediate (3S,5S)-5-((1S,3S)-1-azido-3-(4-methoxy-3-(3-methoxypropoxy)benzyl)-4-methylpentyl)-3-isopropyldihydrofuran-2(3*H*)-one (purity 64.9 %) was added to 117 mL of an emulsion. The emulsion was prepared by mixing the components at the room temperature in the following order and ratio; 1 mL of n-heptan, 0.16 g of Aerosol® OT 100% (98 w/w % sodium bis(2-ethylhexyl)sulfosuccinate) and 0.1 mL of water. The emulsion was pre-heated to 55 °C before adding the azide intermediate. After the aziode intermediate was added to an emulsion, crystallization mixture was maintained at 50 °C for 15 minutes for all solid to dissolve. Then the emulsion was cooled to 10 °C with average cooling ramp approx. 0.11 °C/min (approx. 6 h). The suspension was maintained at the final crystallization temperature (10 °C) for the next 12 hours to allow azide intermediate to completely crystallize. The formed product was isolated by filtration and washed with 10 mL of water.

4.38 g of product with 98.03 % purity (area %) was isolated.

### Example 6: Purification of azide intermediate of aliskiren

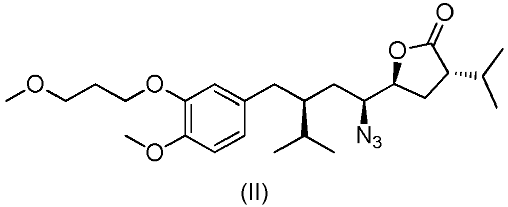

63.0 g of crude azide intermediate (3S,5S)-5-((1S,3S)-1-azido-3-(4-methoxy-3-(3-methoxypropoxy)benzyl)-4-methylpentyl)-3-isopropyldihydrofuran-2(3*H*)-one (purity 45.1 %) was added to an emulsion. The emulsion was prepared by mixing the components at the room temperature in the following order and quantities; 600 mL of n-heptan, 96.6 g of Aerosol® OT 100% (98 w/w % sodium bis(2-ethylhexyl)sulfosuccinate) and 60 mL of water. The emulsion was pre-heated to 55 °C before adding the azide intermediate. After the azide intermediate was added to an emulsion, crystallization mixture was maintained at 45 °C for 20 minutes to obtain clear crystallization media. After that the crystallization mixture was cooled to 40 °C and 300 mf of pure seeds were added. Then the formed suspo-emulsion was further cooled using average cooling ramp 0.05 °C/min to final crystallization temperature 10 °C (approx. 10 h). The suspension was maintained at the final crystallization temperature (10 °C) for the next 6 hours to allow azide intermediate to completely crystallize. The formed product was isolated by filtration and washed with 30 mL of water.

28.0 g of product with 97.43 % purity (area %) was isolated.

### Example 7: Purification of orlistat

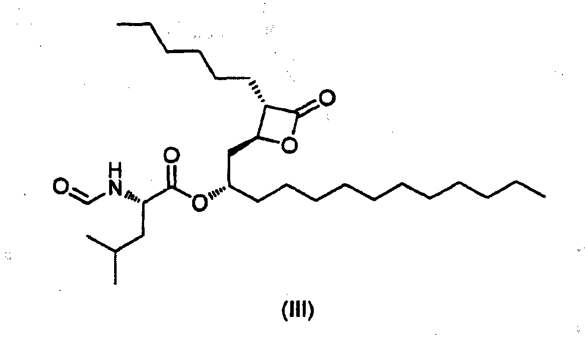

34 g of crude orlistat (S)-(S)-1-((2S,3S)-3-hexyl-4-oxooxetan-2-yl)tridecan-2-yl 2-formamido-4-methylpentanoate (purity 90.2 %, 85.0 w/w %) was added to an emulsion consisting of 100.0 mL of heptan, 18.90 mL of water, 14.67 g of Aerosol® OT 100% (98 w/w % sodium bis(2-ethylhexyl)sulfosuccinate) and 0.63 g of Aerosol® AY 100% (98 % sodium diamyl sulfosuccinate). The suspo-emulsion was heated from room temperature to 40 °C with average heating ramp 1 °C/min and maintained at this temperature for 10 minutes for all solid to dissolve. Then the emulsion was cooled to 21 °C with average cooling ramp 1 K/min and the seeds of pure orlistat were added (200 mg). The suspo-emulsion was maintained at the temperature 21 °C for the next 30 minutes to allow orlistat to partially crystallize. The suspension was then further cooled to final crystallization temperature 19 °C in 200 minutes, with the average cooling ramp of 0.01 °C/min. The suspension was maintained at the final crystallization temperature for the next 15 hours to allow orlistat to completely crystallize. The formed product was isolated by filtration and washed with 15 mL of water.

27.42 g of orlistat with a purity of 98.69 area % and 95.2 w/w % was isolated.

### Example 8: Purification of orlistat

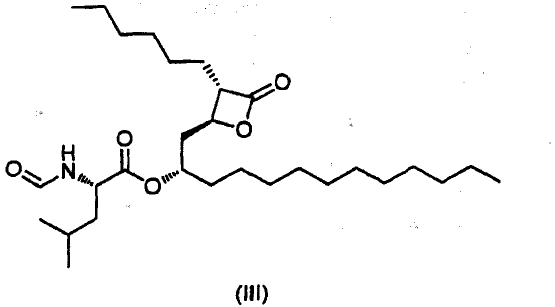

34 g of crude orlistat (S)-(S)-1-((2S,3S)-3-hexyl-4-oxooxetan-2-yl)tridecan-2-yl 2-formamido-4-methylpentanoate (purity 90.2 %, 85.0 w/w %) was added to an emulsion consisting of 100.0 mL of heptan, 2.52 mL of water, 13.23 g of Aerosol® OT 100% (98 w/w % sodium bis(2-ethylhexyl)sulfosuccinate) and 1.89 g of Aerosol® AY 100% (98 % sodium diamyl sulfosuccinate). The suspo-emulsion was heated from room temperature to 40 °C with average heating ramp 1 °C/min and maintained at this temperature for 10 minutes for all solid to dissolve. Then the emulsion was cooled to 21 °C with average cooling ramp 1 K/min and the seeds of pure orlistat were added (200 mg). The suspo-emulsion was maintained at the temperature 21 °C for the next 30 minutes to allow orlistat to partially crystallize. The suspension was then further cooled to final crystallization temperature 19 °C in 200 minutes, with the average cooling ramp of 0.01 °C/min. The suspension was maintained at the final crystallization temperature for the next 15 hours to allow orlistat to completely crystallize. The formed product was isolated by filtration and washed with 15 mL of water.

24.34 g of orlistat with a purity of 98.67 area % and 95.0 w/w % was isolated.

### Example 9: Purification of sodium pantoprazole

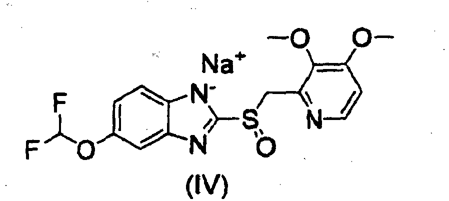

5.00 g of crude sodium pantoprazole monohydrate sodium 5-(difluoromethoxy)-2-(((3,4-dimethoxypyridin-2-yl)methyl)sulfinyl)benzo[d]imidazol-1-ide was added to an emulsion prepared by mixing the components at room temperature in the following order and ratio; 102.8 mL of n-heptan, 0.14 g of Aerosol® OT 100% (98 w/w % sodium bis(2-ethylhexyl)sulfosuccinate) and 428 mL of water. The emulsion was pre-heated to 62 °C before adding the crude sodium pantoprazole monohydrate. After the crude product was added, the crystallization mixture was maintained at 62 °C for 5 minutes for all solid to dissolve. Then the emulsion was cooled to 27 °C with average cooling ramp approx. 1 °C/min (approx. 0.5 h), and was the further cooled to final crystallization temperature -4 °C with average cooling ramp approx. 0.05 °C/min (approx. 10 h). To the crystallization mixture pure seeds of sodium pantoprazol sesquihydrate (100 mg) were added at the temperature of crystallization mixture 27 °C. The suspension was maintained at the final crystallization temperature (-4 °C) for the next 12 hours to allow sodium pantoprazol sesquihydrate to completely crystallize. The formed product was isolated by filtration under nitrogen and washed with 10 mL of ice-cold *n*-heptane.

4.85 g of product with 98.08 % purity (area %) was isolated.

### Example 10: Purification of sodium pantoprazole

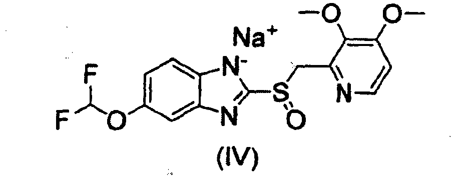

50.0 g of crude sodium pantoprazole monohydrate sodium 5-(difluoromethoxy)-2-(((3,4-dimethoxypyridin-2-yl)methyl)sulfinyl)benzo[d]imidazol-1-ide was added to an emulsion prepared by mixing the components at room temperature in the following order and ratio; 1028 mL of n-heptan, 1.4 g of Aerosol® OT 100% (98 w/w % sodium bis(2-ethylhexyl)sulfosuccinate) and 42.8 mL of water. The emulsion was pre-heated to 62 °C before adding the crude sodium pantoprazole monohydrate. After the crude product was added, the crystallization mixture was maintained at 62 °C for 5 minutes for all solid to dissolve. Then the emulsion was cooled to 27 °C with average cooling ramp approx. 1 °C/min (approx. 0.5 h), and was the further cooled to final crystallization temperature 0 °C with average cooling ramp approx 0.05 °C/min (approx. 10 h). To the crystallization mixture pure seeds of sodium pantoprazol sesquihydrate (500 mg) were added at the temperature of crystallization mixture 27 °C, during the slow cooling. The suspension was maintained at the final crystallization temperature (0 °C) for the 12 hours to allow sodium pantoprazol sesquihydrate to completely crystallize. The formed product was isolated by filtration under nitrogen and washed with 100 mL of ice-cold *n*-heptane.

42.6 g of product with 98.08 % purity (area %) was isolated

### Example 11: Purification of orlistat

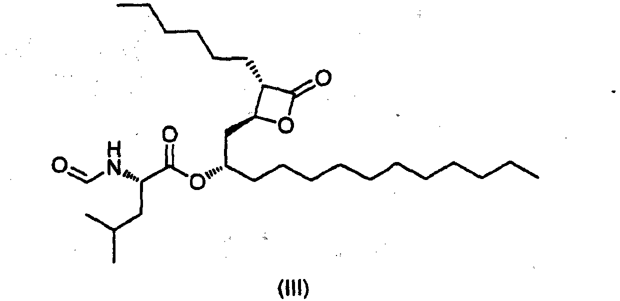

34 g of crude orlistat (S)-(S)-1-((2S,3S)-3-hexyl-4-oxooxetan-2-yl)tridecan-2-yl 2-formamido-4-methylpentanoate (purity 90.2 %, 85.0 w/w %) was added to an emulsion consisting of 100.0 mL of heptan, 8.82 mL of water, 14.67 g of Aerosol® OT 100% (98 w/w % sodium bis(2-ethylhexyl)sulfosuccinate) and 0.63 g of Aerosol® AY 100% (98 % sodium diamyl sulfosuccinate) The suspo-emulsion was heated from room temperature to 40 °C with average heating ramp 1 °C/min and maintained at this temperature for 10 minutes for all solid to dissolve. Then the emulsion was cooled to 21 °C with average cooling ramp 1 K/min and the seeds of pure orlistat were added (200 mg). The suspo-emulsion was maintained at the temperature 21 °C for the next 30 minutes to allow orlistat to partially crystallize. The suspension was then further cooled to final crystallization temperature 19 °C in 200 minutes, with the average cooling ramp of 0.01 °C/min. The suspension was maintained at the final crystallization temperature for the next 15 hours to allow orlistat to completely crystallize. The formed product was isolated by filtration and washed with 15 mL of water.

26.08 g of orlistat with a purity of 98.70 area % and 96.4 w/w % was isolated.

## Claims

1. A process for increasing the purity of organic compounds, wherein the organic compound is crystallized from a stable emulsion comprising water, hydrocarbon and a surfactant,
wherein water is dispersed phase and hydrocarbon is continuous phase, and
wherein the emulsion comprising water, hydrocarbon and a surfactant is an emulsion comprising water, n-heptane and sodium bis(2-ethylhexyl)sulfosuccinate.

2. The process according to claim 1, wherein the ratio of mass of organic compound (g) to volume of hydrocarbon (L) is between 1 and 1000 g/L, preferably between 30 and 500 g/L and most preferably between 45 and 350 g/L.

3. The process according to claim 1 or 2, wherein the overall molar surfactant concentration in hydrocarbon is between 0.01 and 5 mol/L, preferably between 0.1 and 2 mol/L and most preferably between 0.05 and 0.5 mol/L.

4. The process according to claim 1, 2 or 3 wherein the molar ratio of the added water to the total content of surfactants (W) is between 0.5 and 100, preferably between 1 and 90 and most preferably between 5 and 80.

5. The process according to claim 1, 2, 3 or 4 wherein the logarithm of electrical conductivity of emulsion, log (*κ* / µS cm⁻¹), before adding the organic compound, is below 1.0, preferably below 0.5 and most preferably below 0.1.

6. The process according to any one of the preceding claims, wherein the emulsion consists of water, n-heptane and sodium bis(2-ethylhexyl)sulfosuccinate.

7. The process according to any one of the preceding claims, wherein the emulsion is seeded with seed crystals of pure organic compound, wherein preferably the temperature of seeding is 1-30°C lower than the temperature at which organic compound is dissolved and/or the final crystallization temperature at which the crystallization is completed is 2 - 50°C below the seeding temperature.

8. The process according to any one of the preceding claims, wherein the organic compound has purity of at least 30% (w/w), more preferably at least 50% (w/w) and most preferably at least 70% (w/w).

9. The process according to any one of the preceding claims, wherein the emulsion cooling speed is less than 1 K/min, preferably less than 0.5 K/min and more preferably less than 0.3 K/min.

10. The process according to any one of the claims 1-5 or 7-9, wherein the emulsion further comprises a co-surfactant, preferably sulfosuccinate based co-surfactant and most preferably the co-surfactant is sodium diamyl sulfosuccinate.

11. The process according to any one of the preceding claims, wherein the organic compound is selected from the group consisting of prazoles such as lansoprazole, pantaprazole, rabeprazole, omeprazole, esomeprazole, dexlansoprazole; statins such as rosuvastatin, fluvastatin, simvastatin, lovastatin, atorvastatin, pitavastatin; ezetimibe, solifenacin, orlistat, fipronil, dabigatran, montelukast, sartans such as valsartan, candesartan, olmesartan, telmisartan, irbesartan, eprosartan; quetiapine, ropinirole, aliskiren, aliskiren bromolactone intermediate, aliskiren azide intermediate and/or pharmaceutically acceptable salts or derivatives thereof, preferably wherein the organic compound is aliskiren, orlistat, ropinirole, pitavastatin, pantoprazole and/or pharmaceutically acceptable salts or derivatives thereof, or preferably wherein the organic compound is aliskiren bromolactone intermediate, aliskiren azide intermediate, orlistat, and/or pantoprazole sodium.

## Patentansprüche

1. Verfahren zum Erhöhen der Reinheit von organischen Verbindungen, wobei die organische Verbindung in einer stabilen Emulsion, umfassend Wasser, Kohlenwasserstoff und ein grenzflächenaktives Mittel, kristallisiert wird, wobei Wasser dispergierte Phase ist und Kohlenwasserstoff kontinuierliche Phase ist, und wobei die Emulsion, umfassend Wasser, Kohlenwasserstoff und ein grenzflächenaktives Mittel, eine Emulsion, umfassend Wasser, n-Heptan und Natriumbis(2-ethylhexyl)sulfosuccinat, ist.

2. Verfahren gemäß Anspruch 1, wobei das Verhältnis von Masse von organischer Verbindung (g) zu Volumen von Kohlenwasserstoff (L) zwischen 1 und 1000 g/L, bevorzugt zwischen 30 und 500 g/L und am stärksten bevorzugt zwischen 45 und 350 g/L liegt.

3. Verfahren gemäß Anspruch 1 oder 2, wobei die Gesamtmolkonzentration an grenzflächenaktivem Mittel in Kohlenwasserstoff zwischen 0,01 und 5 mol/L, bevorzugt zwischen 0,1 und 2 mol/L und am stärksten bevorzugt zwischen 0,05 und 0,5 mol/L liegt.

4. Verfahren gemäß Anspruch 1, 2 oder 3, wobei das molare Verhältnis des zugegebenen Wassers zum Gesamtgehalt an grenzflächenaktiven Mitteln (*W*) zwischen 0,5 und 100, bevorzugt zwischen 1 und 90 und am stärksten bevorzugt zwischen 5 und 80 liegt.

5. Verfahren gemäß Anspruch 1, 2, 3 oder 4, wobei der Logarithmus von elektrischer Leitfähigkeit der Emulsion, log (κ / µS cm⁻¹), vor dem Zugeben der organischen Verbindung unter 1,0, bevorzugt unter 0,5 und am stärksten bevorzugt unter 0,1 liegt.

6. Verfahren gemäß einem der vorhergehenden Ansprüche, wobei die Emulsion aus Wasser, n-Heptan und Natriumbis(2-ethylhexyl)sulfosuccinat besteht.

7. Verfahren gemäß einem der vorhergehenden Ansprüche, wobei die Emulsion mit Impfkristallen von reiner organischer Verbindung angeimpft wird, wobei bevorzugt die Impftemperatur 1-30°C niedriger ist als die Temperatur, bei welcher organische Verbindung gelöst wird, und/oder die Kristallisationsendtemperatur, bei welcher die Kristallisation abgeschlossen ist, 2 - 50°C unter der Impftemperatur liegt.

8. Verfahren gemäß einem der vorhergehenden Ansprüche, wobei die organische Verbindung eine Reinheit von mindestens 30 % (w/w), stärker bevorzugt mindestens 50 % (w/w) und am stärksten bevorzugt mindestens 70 % (w/w) aufweist.

9. Verfahren gemäß einem der vorhergehenden Ansprüche, wobei die Emulsions-Kühlgeschwindigkeit niedriger als 1 K/min, bevorzugt niedriger als 0,5 K/min und am stärksten bevorzugt niedriger als 0,3 K/min ist.

10. Verfahren gemäß einem der Ansprüche 1-5 oder 7-9, wobei die Emulsion ferner ein grenzflächenaktives Comittel, bevorzugt grenzflächenaktives Comittel auf Sulfosuccinat-Basis umfasst, und wobei am stärksten bevorzugt das grenzflächenaktive Comittel Natriumdiamylsulfosuccinat ist.

11. Verfahren gemäß einem der vorhergehenden Ansprüche, wobei die organische Verbindung aus der Gruppe ausgewählt ist, welche aus Prazolen wie Lansoprazol, Pantaprazol, Rabeprazol, Omeprazol, Esomeprazol, Dexlansoprazol; Statinen wie Rosuvastatin, Fluvastatin, Simvastatin, Lovastatin, Atorvastatin, Pitavastatin; Ezetimib, Solifenacin, Orlistat, Fipronil, Dabigatran, Montelukast, Sartanen wie Valsartan, Candesartan, Olmesartan, Telmisartan, Irbesartan, Eprosartan; Quetiapin, Ropinirol, Ali skiren, Ali skirenbromlacton-Zwi schenprodukt, Aliskirenazid-Zwischenprodukt und/oder pharmazeutisch verträglichen Salzen oder Derivaten davon besteht, wobei die organische Verbindung bevorzugt Aliskiren, Orlistat, Ropinirol, Pitavastatin, Pantoprazol und/oder pharmazeutisch verträgliche Salze oder Derivate davon ist, oder wobei die organische Verbindung bevorzugt Aliskirenbromlacton-Zwischenprodukt, Aliskirenazid-Zwischenprodukt, Orlistat und/oder Pantoprazol-Natrium ist.

## Revendications

1. Procédé d'augmentation de la pureté de composés organiques, dans lequel le composé organique est cristallisé à partir d'une émulsion stable comprenant de l'eau, un hydrocarbure et un tensioactif,
dans lequel l'eau constitue la phase dispersée et l'hydrocarbure constitue la phase continue, et
dans lequel l'émulsion comprenant de l'eau, un hydrocarbure et un tensioactif est une émulsion comprenant de l'eau, le n-heptane et le bis(2-éthylhexyl)sulfosuccinate de sodium.

2. Procédé selon la revendication 1, dans lequel le rapport de la masse de composé organique (g) au volume d'hydrocarbure (L) est compris entre 1 et 1000 g/L, de préférence entre 30 et 500 g/L et idéalement entre 45 et 350 g/L.

3. Procédé selon la revendication 1 ou 2, dans lequel la concentration molaire globale en tensioactif dans l'hydrocarbure est comprise entre 0,01 et 5 mol/L, de préférence entre 0,1 et 2 mol/L et idéalement entre 0,05 et 0,5 mol/L.

4. Procédé selon la revendication 1, 2 ou 3, dans lequel le rapport molaire de l'eau ajoutée à la teneur totale en tensioactifs (P) est compris entre 0,5 et 100, de préférence entre 1 et 90 et idéalement entre 5 et 80.

5. Procédé selon la revendication 1, 2, 3 ou 4 dans lequel le logarithme de conductivité électrique de l'émulsion, 10g(*K*/µS cm⁻¹), avant l'ajout du composé organique, est inférieur à 1,0, de préférence inférieur à 0,5 et idéalement inférieur à 0,1.

6. Procédé selon l'une quelconque des revendications précédentes, dans lequel l'émulsion est constituée d'eau, de n-heptane et de bis(2-éthylhexyl)sulfosuccinate de sodium.

7. Procédé selon l'une quelconque des revendications précédentes, dans lequel l'émulsion est ensemencée par des germes cristallins de composé organique pur, dans lequel de préférence la température d'ensemencement est inférieure de 1 à 30°C à la température à laquelle le composé organique est dissous et/ou la température de cristallisation finale à laquelle la cristallisation est terminée est inférieure de 2 à 50°C à la température d'ensemencement.

8. Procédé selon l'une quelconque des revendications précédentes, dans lequel le composé organique a une pureté d'au moins 30% (p/p), plus préférablement d'au moins 50% (p/p) et idéalement d'au moins 70% (p/p).

9. Procédé selon l'une quelconque des revendications précédentes, dans lequel la vitesse de refroidissement d'émulsion est inférieure à 1 K/min, de préférence inférieure à 0,5 K/min et plus préférablement inférieure à 0,3 K/min.

10. Procédé selon l'une quelconque des revendications 1 à 5 ou 7 à 9, dans lequel l'émulsion comprend en outre un co-tensioactif, de préférence un co-tensioactif à base de sulfosuccinate et idéalement le co-tensioactif est le diamyl sulfosuccinate de sodium.

11. Procédé selon l'une quelconque des revendications précédentes, dans lequel le composé organique est choisi dans le groupe constitué de prazoles tels que le lansoprazole, le pantaprazole, le rabéprazole, l'oméprazole, l'ésoméprazole, le dexlansoprazole ; de statines telles que la rosuvastatine, la fluvastatine, la simvastatine, la lovastatine, l'atorvastatine, la pitavastatine ; d'ézétimibe, de solifénacine, d'orlistat, de fipronil, de dabigatran, de montélukast, de sartans tels que le valsartan, le candésartan, l'olmésartan, le telmisartan, l'irbésartan, l'éprosartan ; de quétiapine, de ropinirole, d'aliskirène, d'un intermédiaire bromolactone d'aliskirène, d'un intermédiaire azide d'aliskirène et/ou de sels ou dérivés pharmaceutiquement acceptables de ceux-ci, de préférence dans lequel le composé organique est l'aliskirène, l'orlistat, le ropinirole, la pitavastatine, le pantoprazole et/ou des sels ou dérivés pharmaceutiquement acceptables de ceux-ci, ou dans lequel, de préférence, le composé organique est un intermédiaire bromolactone d'aliskirène, un intermédiaire azide d'aliskirène, l'orlistat et/ou le pantoprazole sodique.
